# FASCICULE DE BREVET EUROPEEN

(11) **EP 2 514 733 B1**
(45) Date de publication et mention de la délivrance du brevet: **29.01.2014**
(21) Numéro de dépôt: 12290134.1
(22) Date de dépôt: 17.04.2012
(51) Int. Cl.: C04B 41/45

(54) **Procédé amélioré pour le traitement de constructions et de terrains par application d'un champs électrique**
Verbessertes Verfahren zur Behandlung von Bauten und Böden durch Anlegen eines elektrischen Feldes
Improved method for the treatment of buildings and grounds by applying an electric field

(30) Priorité: 21.04.2011 FR 1101268
(43) Date de publication de la demande: 24.10.2012
(73) Titulaire: Chasteau, François, 92400 Courbevoie (FR)
(72) Inventeur: Chasteau, François, 92400 Courbevoie (FR)
(74) Mandataire: Andrieux, Benoît

(56) Documents cités:
- WO-A2-2006/125878

## Description

La présente invention concerne les procédés pour le traitement de constructions et de terrains par application d'un champ électrique.

On sait que, par application d'un champ électrique à une construction ou à un terrain, il est possible, par électro-osmose, d'assainir cette construction ou ce terrain en les asséchant. On sait de plus que, par électro-injection, on peut injecter dans une construction ou un terrain, grâce à la formation d'un champ hydraulique d'origine électro-osmotique, un produit de traitement (par exemple inhibiteur de corrosion, minéralisateur, produit de consolidation, produit d'étanchement, produit de colmatage, etc.) miscible à l'eau. Les documents WO 02/33147, WO 02/33148 et WO 2006/125878 par exemple, décrivent de tels procédés.

La mise en oeuvre de ces procédés connus exige naturellement des électrodes pour appliquer le champ électrique à ladite construction et audit terrain. Les électrodes connues utilisées à cet effet se présentent généralement sous la forme de corps métalliques discrets, par exemple de forme cylindrique, devant être logés dans des perçages pratiqués dans la construction ou le terrain.

On connait également du document WO 2006/125878 des électrodes souples, formées par une pièce de matière souple, électriquement conductrice, apte à être appliquée sur une surface accessible de la construction ou du terrain et à en épouser la forme. Généralement, la matière souple est absorbante pour les liquides aqueux, afin de constituer une réserve de ceux-ci.

La présente invention concerne un procédé optimisé de traitement d'une construction par application d'un champ électrique, utilisant des électrodes souples. Pour optimiser l'efficacité du traitement, comme par exemple l'étanchéité d'un matériau, la protection contre la corrosion, ou la consolidation du matériau, le procédé selon l'invention comporte une phase de détermination du profil de pénétration du produit injecté. Il est alors possible d'agir sur des paramètres du procédé pour améliorer le traitement.

De façon générale, l'objet de l'invention est un procédé pour le traitement d'un matériau par électroinjection d'un produit de traitement du matériau, dans lequel on applique et on fixe sur au moins une surface accessible du matériau au moins une pièce de matière souple, de façon que la pièce épouse la forme de la surface accessible, on porte la pièce de matière souple à un potentiel électrique, et on alimente la pièce de matière souple par une solution dudit produit de traitement. Le procédé comporte également les étapes suivantes :
- on détermine un profil de pénétration dudit produit de traitement au moyen de mesures de constante diélectrique dudit matériau, pour différentes profondeur au sein dudit matériau ; et
- on optimise le traitement en fonction dudit profil.

Selon l'invention on peut déterminer le profil de pénétration en réalisant les étapes suivantes :
- on réalise un premier maillage sur une partie au moins de ladite surface accessible ;
- on réalise en chaque point du maillage lesdites mesures de constante diélectrique.

Selon un mode de réalisation, on détermine un second profil de pénétration du produit de traitement au moyen de mesures de tension au sein du matériau en cours de traitement.

Pour optimiser le traitement, il est possible de déterminer au moyen du profil de pénétration, une zone à traiter de façon préférentielle et traiter cette zone. Dans ce cas, on peut également réaliser un second maillage au niveau de cette zone, le second maillage comportant plus de mailles que le premier maillage, et déterminer un nouveau profil de pénétration.

Pour optimiser le traitement, il est également possible de modifier le potentiel de la pièce de matière souple en fonction du profil, ou en modifiant la quantité de produit injecté.

Lorsque l'on utilise deux électrodes, l'une constituant une cathode, l'autre une anode, on peut optimiser le traitement en inversant la polarité des électrodes de façon à favoriser une polymérisation homogène du produit dans le matériau.

Selon un mode de réalisation, le matériau appartient à une construction possédant une surface intrados et une surface extrados, on peut alors optimiser le traitement en couplant la pièce de matière souple positionnée sur l'une des surfaces, à des électrodes radiantes positionnées sur l'autre surface. Selon cette configuration, on peut optimiser le traitement en injectant le produit par l'une des surfaces de la construction en alimentant les électrodes radiantes en produit de traitement, et en portant les électrodes radiantes à un potentiel électrique, puis en portant la pièce de matière souple à un potentiel électrique pour attirer le produit vers l'autre surface de la construction.

Enfin, selon l'invention, on peut optimiser le traitement en utilisant des électrodes équipées d'une alimentation individuelle en produit, et une alimentation électrique individuelle.

D'autres caractéristiques et avantages du procédé selon l'invention, apparaîtront à la lecture de la description ci-après d'exemples non limitatifs de réalisations, en se référant aux figures annexées et décrites ci-après.
- La figure 1 illustre un exemple de construction sur lequel on applique le procédé selon l'invention.
- La figure 2 est un schéma du principe de l'électro-osmose et de l'électro-injection utilisant des électrodes souples.
- La figure 3 illustre un maillage utilisé pour déterminer un profil de pénétration du produit de traitement.
- La figure 4 montre un exemple de résultat de mesures de la constante diélectrique, représentée sous forme de teneur en eau.
- La figure 5 illustre un maillage fin utilisé pour déterminer un profil de pénétration du produit de traitement.
- La figure 6 illustre des mesures de constantes diélectriques avant le traitement d'assèchement selon trois profondeurs.
- La figure 7 illustre des mesures de constantes diélectriques pendant le traitement d'assèchement selon trois profondeurs.
- La figure 8 illustre des mesures de constantes diélectriques après le traitement d'assèchement selon trois profondeurs.
- La figure 9 illustre un maillage utilisé pour réaliser des mesures de potentiel.
- La figure 10 illustre les résultats obtenus sur le maillage de la figure 9, et montre l'évolution du potentiel au cours du temps.
- La figure 11 représente la tension (ordonnées) en fonction de la distance (abscisse) pour différents temps (différentes courbes).
- La figure 12 représente un dispositif pour mesurer la constante diélectrique d'un matériau.

L'invention concerne un procédé pour le traitement d'un matériau par électro-injection d'un produit de traitement de ce matériau.

Il comporte les étapes suivantes :
1. on applique et on fixe sur au moins une surface accessible du matériau au moins une pièce de matière souple, de façon que la pièce épouse la forme de la surface accessible;
2. on porte la pièce de matière souple à un potentiel électrique ;
3. on alimente la pièce de matière souple par une solution aqueuse dudit produit de traitement ;
4. on détermine un profil de pénétration dudit produit de traitement au moyen de mesures de constante diélectrique du matériau, pour différentes profondeur au sein dudit matériau ; et
5. on modifie des paramètres du procédé en fonction dudit profil.

### A- Électro-iniection

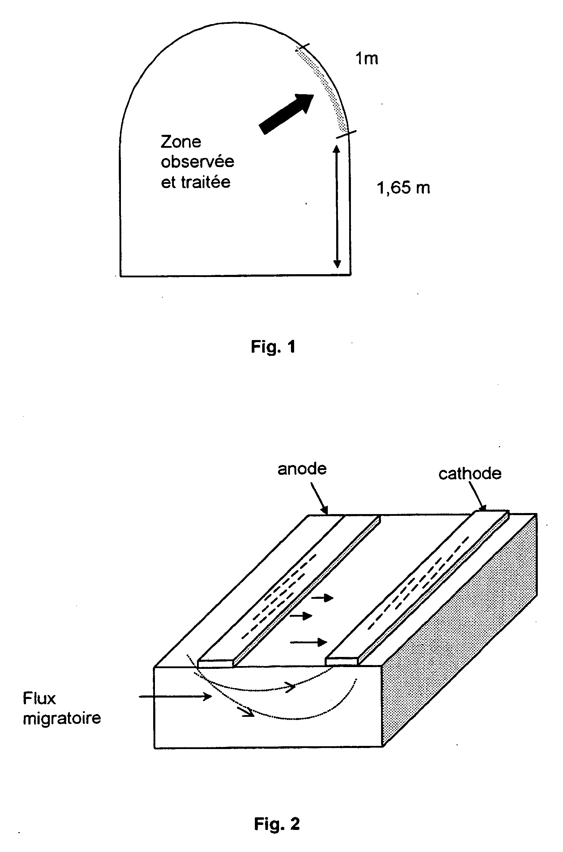

Selon un exemple de réalisation, le traitement consiste à assécher et étanchéifier une construction représentée sur la figure 1. Le but de ce traitement est d'injecter un produit hydrofuge sur une profondeur de 5 cm à 10 cm.

Selon l'invention, on utilise le principe de l'électro-osmose et de l'électro-injection. Ce procédé, illustré schématiquement sur la figure 2, repose sur la migration des ions au travers d'un matériau, ici la maçonnerie, à l'aide d'un champ électrique imposé entre deux électrodes. Les électrodes utilisées sont des électrodes de fibres de carbone que l'on applique à la surface du matériau à traiter. Ces fibres de carbones ont la particularité d'être conductrices. Chaque électrode est alternativement anode ou cathode. Ceci permet de faire pénétrer le produit par les deux cotés. Le produit utilisé pour étanchéifier le mur en maçonnerie est un mélange conducteur. Celui-ci permet de boucher les pores et les fissures de la maçonnerie après polymérisation. Il est pulvérisé sur chaque électrode de carbones. La profondeur du traitement est d'autant plus grande que l'espace entre les électrodes est grand et que la tension imposée est élevée (figure 2).

On utilise de préférence des électrodes telles que décrite dans la demande WO 2006/125878. Ces électrodes sont formées par au moins une pièce de matière souple absorbante pour les liquides aqueux, électriquement conductrice, apte à être appliquée sur une surface accessible de la construction ou terrain et à en épouser la forme.

Cette électrode peut présenter une nature spongieuse électriquement conductrice, ou une nature spongieuse non électriquement conductrice mais associée à un élément conducteur.

Cette électrode peut également comporter une matière souple constituée de fibres électriquement conductrices, comme des fibres de carbone par exemple. Selon cette configuration, la matière souple peut être un entrelacs de mèches de fibres électriquement conductrices.

La pièce de matière souple, électriquement conductrice, peut présenter la forme d'une bande.

### B- Détermination d'un profil de pénétration du produit de traitement

Pour optimiser l'efficacité de ce traitement, c'est-à-dire l'assèchement et l'étanchéisation du matériau, le procédé selon l'invention comporte une phase de détermination du profil de pénétration du produit injecté. Il est alors possible d'agir sur des paramètres du procédé pour améliorer le traitement.

Selon l'invention, on détermine le profil de pénétration du produit injecté au moyen de mesure de la constante diélectrique (permittivité relative) du matériau traité. Pour ce faire, on détermine de façon ponctuelle la constante diélectrique du matériau à plusieurs profondeurs. Notons que la méthode de mesure de la constante diélectrique, ou permittivité relative, n'a aucune influence sur le procédé selon l'invention, car l'on recherche une évolution de cette grandeur plutôt qu'une valeur. En pratique, on réalise un maillage de la paroi du matériau traité. Un exemple de réalisation de ce procédé est décrit ci-après.

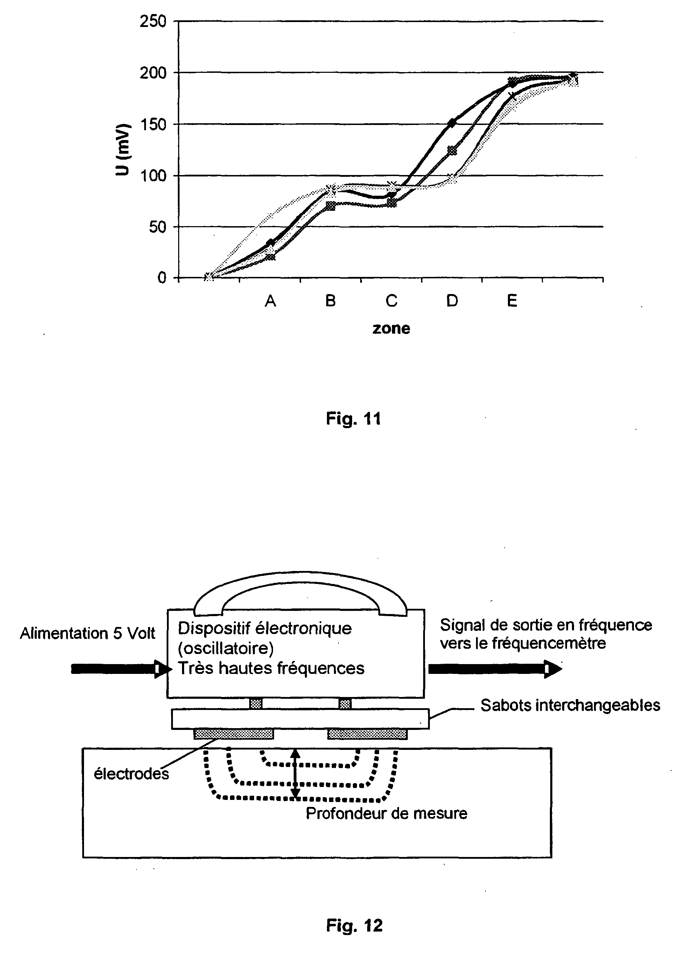

Pour réaliser la mesure de la constante diélectrique au sein du matériau traité, on peut utiliser un dispositif tel que le palpeur Dupas, développé au laboratoire des ponts et chaussés. A partir de cet appareil et d'un calibrage, on peut également en déduire la teneur en eau des matériaux par l'intermédiaire de leur constante diélectrique. En effet, à l'aide du dispositif électronique, l'appareil oscille et détermine une fréquence qui est proportionnelle à la teneur en eau présente dans le matériau. Cet appareil est illustré sur la figure 12.

On utilise trois sabots avec des tailles et des espaces inter électrodes différents. Ceci permet d'analyser des teneurs en eau sur différentes profondeurs : en surface avec le petit sabot, profondeur moyenne avec le moyen sabot et grande profondeur pour le grand sabot.

Pour réaliser les mesures, il faut dans un premier temps mesurer la fréquence de l'air pour chaque sabot F°ᵢ. Ceci nous permet d'avoir une fréquence de référence pour comparer toutes les fréquences que l'on mesure. En effet, ces différences de fréquences permettent de se ramener à un étalonnage type (50 Hz correspond à 1% de teneur en eau). En admettant que 1 % de teneur en eau correspond à 50 Hz, on faire les analyses directement sur les teneurs en eau relatives.

Ensuite, on met en contact le fer à repasser possédant l'un des sabots avec le mur à analyser et on relève la fréquence obtenue. Pour effectuer une bonne analyse, on procède à la mise en place de maillages sur le mur à traiter.

### Mesures préliminaires : (premier maillage à traiter)

On effectue un premier maillage grossier sur l'ensemble du mur à traiter afin de voir s'il existe des zones beaucoup plus humides ou des zones représentatives du reste du mur où l'on peut faire un maillage plus précis. On effectue également quelques mesures sur le mur d'un escalier déjà traité dans le but d'y voir une première différence relative.

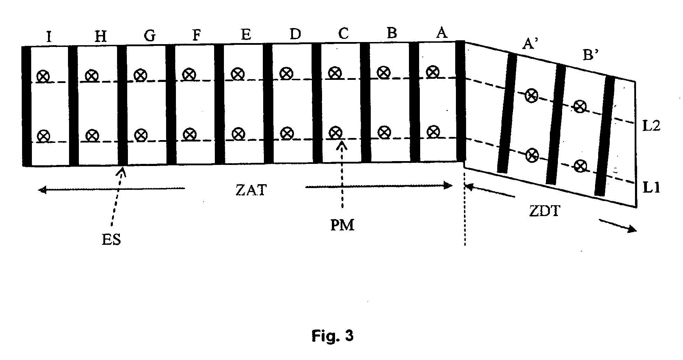

Ce premier maillage est représenté sur la figure 3. Il consiste à découper la zone à traiter (ZAT) en 9 sous-zones, notées A à l, et à découper une zone voisine déjà traitée (ZDT) en deux sous-zones, notées A' et B', puis à découper l'ensemble en deux lignes (L1 et L2), sur lesquelles on réalise une mesure (un point de mesure est noté PM sur la figure 3) dans chaque sous-zone. Chaque sous-zone est séparée par une électrode souple de carbone, collée en surface (ES).

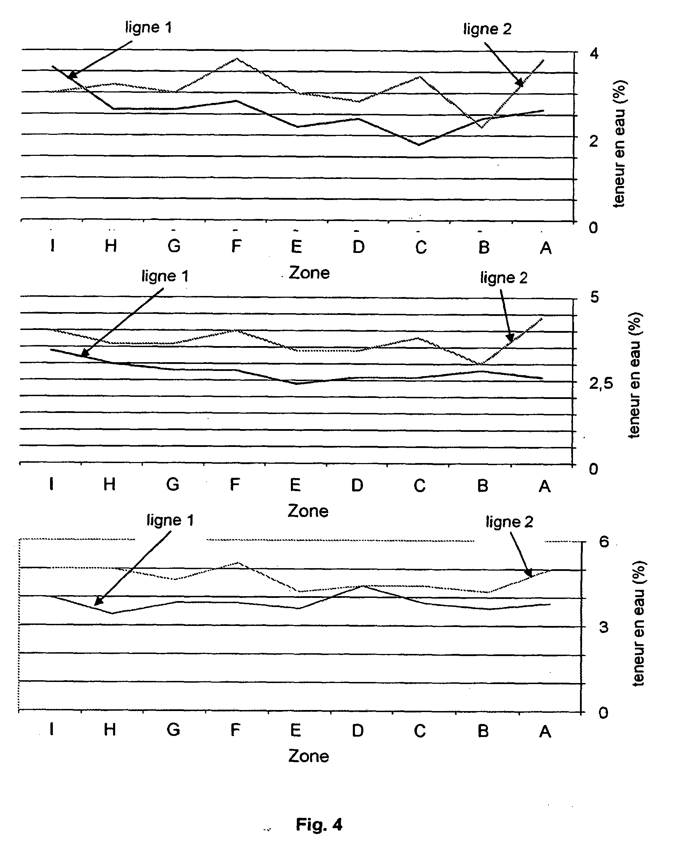

En analysant les fréquences mesurées aux points de mesure (PM), on obtient les résultats en teneur en eau de la figure 4. La figure 4 illustre les courbes de teneur en eau (TE) en fonction des sous-zones (A à l) et pour les deux lignes L1 et L2. La figure du haut correspond aux mesures réalisées avec le petit sabot, celle du milieu correspond aux mesures réalisées avec le moyen sabot, et enfin, la figure du bas correspond aux mesures réalisées avec le grand sabot.

On observe que les courbes ont une tendance hétérogène, avec des variations. De plus on remarque que les zones C et F sont les zones les plus humides en surface. On utilise donc la zone F pour effectuer un maillage plus précis.

### Mesures plus précises: (deuxième maillage)

On découpe la zone F en sept lignes et cinq colonnes (C1 à C5) ce qui correspond au plus petit maillage lorsque l'on prend le grand sabot comme référence de dimensionnement.

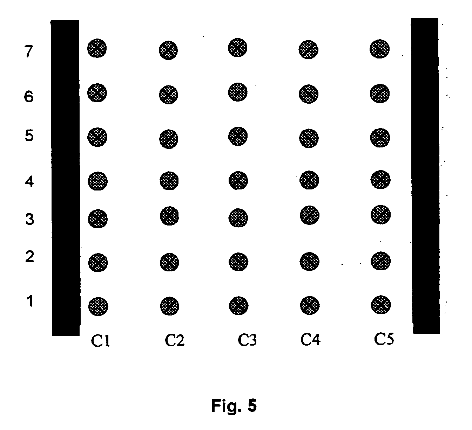

La figure 5 illustre ce second maillage.

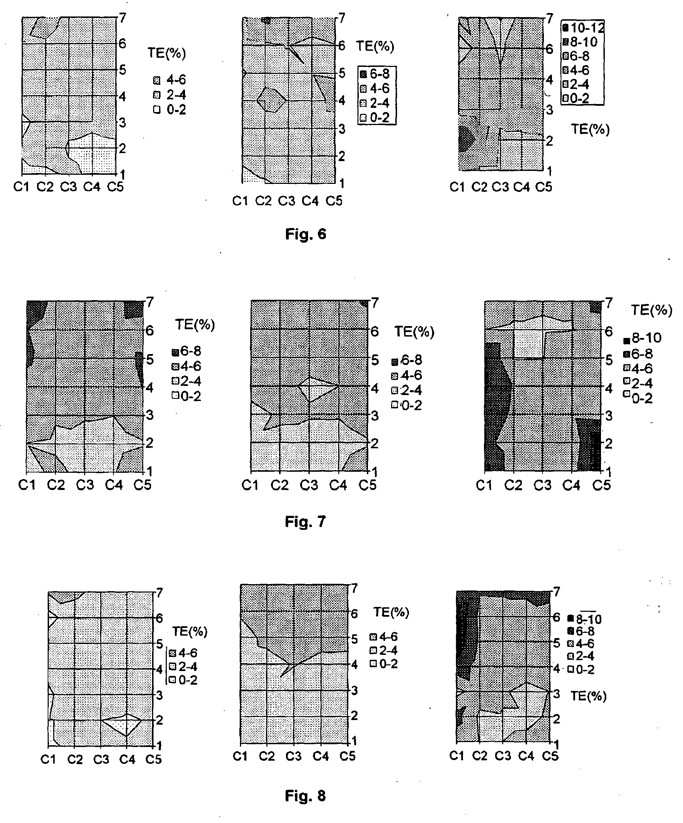

Des mesures ont été réalisées sur ce maillage avant (figure 6), pendant (figure 7) et après (figure 8) le traitement d'assèchement avec à chaque fois les trois sabots. Chacune des trois figures illustre la teneur en eau sur la zone F découpée par le second maillage (7 lignes et 5 colonnes). Les images de gauche correspondent aux mesures réalisées avec le petit sabot, celles du milieu gauche correspondent aux mesures réalisées avec le moyen sabot, et enfin, celles de droite correspondent aux mesures réalisées avec le grand sabot.

Si on examine globalement les résultats obtenus on s'aperçoit qu'avant le traitement les profils d'humidité étaient très hétérogènes avec de nombreux pics et des teneurs en eau en moyenne égale à 3% pour le petit sabot et 5% pour le grand sabot. Après le traitement, on observe surtout une homogénéisation des profils d'humidité.

Si on regarde les mêmes résultats ligne par ligne, on observe dans un premier temps que les profils d'humidité qui étaient initialement hétérogènes deviennent plus homogènes et linéaires. Dans un deuxième temps, si on s'intéresse aux mesures prises pendant le traitement, on peut observer des profils de pénétration des produits électro-injectés. En effet, on distingue de plus grands pourcentages de teneur en eau près des électrodes qui sont alternativement anodes et cathodes et où l'on injecte les produits. Les profils ont la forme de cuvettes.

### Variantes

Selon un mode de réalisation, on réalise en chaque noeud du maillage, ou sur un maillage différent, des mesures de tension, durant le traitement, de façon à confirmer le profil de pénétration, et à évaluer l'hétérogénéité du matériau en terme de réponse électrique. Les hétérogénéités concernent à la fois l'humidité et la conductivité du matériau.

Ainsi, si le profil par la mesure de tension est différent du profil établi précédemment, ceci peut indiquer que l'humidité n'est pas répartie de façon homogène, il peut s'agir d'une poche d'eau par exemple. Ceci affecte considérablement l'efficacité du procédé.

On peut également détecter des hétérogénéités de conduction électrique dans le matériau, indiquant la présence d'objets tels que des fissures, de la ferraille, ...

### Exemple de réalisation

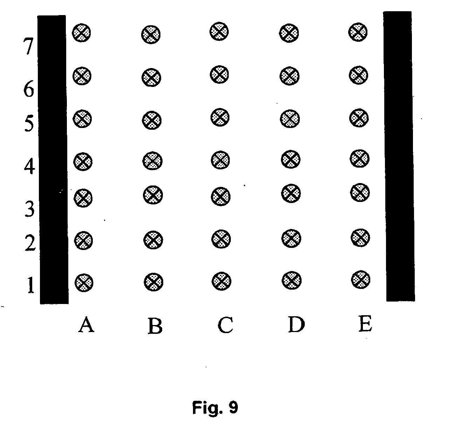

De la même façon que pour la zone F, on découpe la zone C en sept lignes et cinq colonnes ce qui correspond à 45 points de mesures. Sur chaque point, on plante des clous sur lesquels sont effectuées les mesures de potentiel. La figure 9 illustre un maillage utilisé pour réaliser des mesures de potentiel.

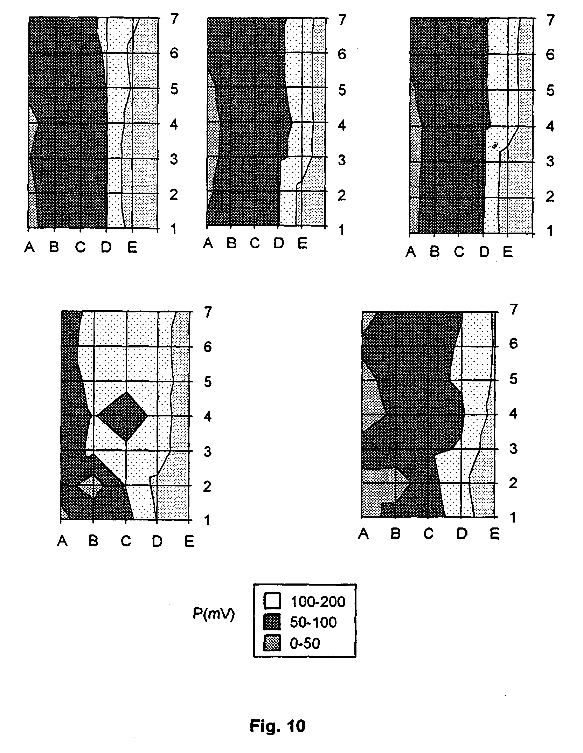

On réalise des mesures sur deux jours, et à des horaires différents, à partir de l'électrode de carbone de gauche. La figure 10 illustre les résultats obtenus sur le maillage de la figure 9, et montre l'évolution du potentiel (P) au cours du temps.

Le mur peut être représenté par plusieurs résistances en série. Initialement, on peut considérer que toutes les résistances sont les mêmes. On obtient alors une droite lorsque l'on trace la tension en fonction de la distance (U = n RI pour n résistances). Lorsque le produit commence à pénétrer dans le mur, la résistivité du mur diminue (le produit est conducteur). On observe alors plusieurs pentes : la pente de pénétration par la gauche, celle par la droite et au milieu une pente plus forte qui correspond au mur plus sec.

C'est ce que l'on observe en traçant la tension (U) en fonction de la distance (zones A, B, C, D, E) pour différents temps (chaque courbe correspond à une date différente). Sur la figure 11, on superpose les courbes à temps différent pour la ligne 1. La figure 11 représente la tension (ordonnées) en fonction de la distance (abscisse) pour différents temps (différentes courbes). Plus on progresse dans le temps, plus on observe des paliers au niveau des électrodes de carbones. Cela nous permet de voir la progression de pénétration.

### C- Optimisation par modification des paramètres du procédé

Pour optimiser le procédé de traitement, on modifie les paramètres du procédé pour que la pénétration dans le milieu soit homogène. Les paramètres modifiables sont par exemple :
- La position des électrodes
- Le maillage de mesure
- La tension électrique d'alimentation des électrodes
- La quantité du produit alimentant les électrodes
- Le type de produits utilisé
- Polarisation des électrodes
- La taille des électrodes

On évite donc que le produit de traitement soit injecté en trop grande quantité au niveau d'une électrode où il y aurait par exemple une fissure, et on s'assure que le produit pénètre en quantité suffisante au niveau d'électrode où la pénétration semble difficile.

A partir du profil de pénétration, on peut déterminer des zones où la vitesse de pénétration du produit de traitement est trop importante (zone argileuse par exemple) et/ou des zones où la vitesse de pénétration du produit de traitement est trop faible (zone avec des pierres de faibles porosités, ciment,..).

Pour rétablir l'homogénéité de pénétration, on modifie la tension d'alimentation des électrodes concernées par ces zones : on diminue la tension d'alimentation des électrodes alimentant une zone à forte vitesse relative, et inversement, on augmente la tension d'alimentation des électrodes alimentant une zone à faible vitesse relative.

Lorsqu'un vide (fissures, grande porosité, trou, ...) reliant deux électrodes est détecté grâce au profil de pénétration, et notamment celui établi par mesure de tension, on modifie la quantité de produit injecté au niveau des électrodes. On peut également modifier le type de produit de façon, par exemple, à boucher certains vides.

Selon un autre mode de réalisation et d'optimisation du procédé, on optimise l'injection en couplant les électrodes souples à des électrodes radiantes en surface. Lorsque le matériau appartient à une construction possédant une surface intrados et une surface extrados, et lorsque le profil de pénétration indique une difficulté à aller en profondeur, on optimise le traitement en couplant la pièce de matière souple positionnée sur l'une des surfaces (intrados ou extrados), à des électrodes radiantes positionnées sur l'autre surface (extrados ou intrados respectivement).

On peut selon cette configuration, optimiser le traitement en injectant le produit par l'une des surfaces (extrados par exemple) de la construction en alimentant les électrodes radiantes en produit de traitement, et en portant les électrodes radiantes à un potentiel électrique, puis en portant la pièce de matière souple à un potentiel électrique pour attirer le produit vers l'autre surface (intrados par exemple) de la structure.

Comme décrit précédemment, chaque électrode peut être alternativement anode ou cathode. Ceci a un grand intérêt pour l'efficacité du traitement. En effet, le produit de traitement, une fois injecté polymérise dans le matériau pour remplir son rôle d'étanchéité ou de consolidation par exemple. Lors du procédé de traitement, on peut même coupler l'injection de produit avec une injection de catalyseur. Le catalyseur permet une polymérisation rapide du produit destiné à étanchéifier le matériau.

Le pH au niveau de l'anode et de la cathode est différent du fait des réactions qui se produisent à leurs niveaux (dégagement d'hydrogène ou d'oxygène). Ainsi le pH tend vers une basicité au niveau de l'anode et le pH tend vers une acidité au niveau de la cathode.

Selon la nature du produit, le pH va accélérer la polymérisation du produit. Il y aura donc une polymérisation préférentielle à l'un ou l'autre des électrodes. En inversant la polarité, on peut rendre alors plus homogène la polymérisation. On peut, de plus, traiter préférentiellement une zone en débutant le procédé avec une configuration anode-cathode adéquat.

Enfin, selon un mode de réalisation, les électrodes sont des électrodes réactives dites "électrodes intelligentes". Une électrode intelligente est une électrode équipée d'un dispositif de contrôle comportant une alimentation en produit individuelle (telle qu'une électrovanne) pour réguler le débit de produit injecté, et une alimentation électrique individuelle, permettant de réguler la tension appliquée. Ce dispositif de contrôle permet ainsi de gérer individuellement l'alimentation électrique de l'électrode, ainsi que la quantité de produit injecté.

Selon un mode de réalisation les boîtiers de contrôle communiquent avec un local technique via un bus. Un poste informatique supporte une application spécifique destinée à recevoir et stocker les informations de mesures (conductivité électrique, impulsions d'un débitmètre,..), et transmettre les commandes destinées à chaque boîtier individuellement: ouverture/fermeture de l'électrovanne d'injection, valeurs de consigne du générateur de courant...

Le technicien en charge du contrôle de l'installation suit en permanence :
- la quantité de produit de traitement injectée sur chaque injecteur, déterminant ainsi la capacité d'absorption sur le point considéré (conduction du milieu, porosité du matériau, fissure, vide,....).
- Les grandeurs électriques permettant de déterminer les réactions du traitement sur le point d'injection et la zone du matériau limitrophe.

Il peut ainsi définir avec une précision optimale un programme de traitement adapté qui se développe ensuite automatiquement puis le modifier à volonté en fonction des réactions observées sur l'ouvrage.

Ce dispositif permet :
- Une parfaite précision du suivi du traitement
- Une uniformisation de la migration du produit dans le matériau
- Une automatisation des séquences d'injection en fonction des réactions au traitement, ce qui permet un fonctionnement 24h/24, réduisant ainsi la durée du chantier, tout en ayant une plus grande efficacité.
- Un rapport permanent et précis de l'activité du traitement
- Possibilité de transmettre au maître d'oeuvre des graphiques de l'évolution du traitement de l'ouvrage (visualisation quotidienne du déplacement du produit dans le matériau jusqu'à saturation).

## Revendications

1. Procédé pour le traitement d'un matériau par électroinjection d'un produit de traitement du matériau, dans lequel on applique et on fixe sur au moins une surface accessible du matériau au moins une pièce de matière souple, de façon que la pièce épouse la forme de la surface accessible, on porte la pièce de matière souple à un potentiel électrique, et on alimente la pièce de matière souple par une solution dudit produit de traitement, **caractérisé en ce que** :
- on détermine un profil de pénétration dudit produit de traitement au moyen de mesures de constante diélectrique dudit matériau, pour différentes profondeur au sein dudit matériau ; et
- on optimise le traitement en fonction dudit profil.

2. Procédé selon la revendication 1, dans lequel on détermine ledit profil de pénétration en réalisant les étapes suivantes :
- on réalise un premier maillage sur une partie au moins de ladite surface accessible ;
- on réalise en chaque point du maillage lesdites mesures de constante diélectrique.

3. Procédé selon l'une des revendications précédentes, dans lequel on détermine un second profil de pénétration dudit produit de traitement au moyen de mesures de tension au sein dudit matériau en cours de traitement.

4. Procédé selon l'une des revendications précédentes, dans lequel on optimise le traitement en déterminant au moyen du profil de pénétration, une zone à traiter de façon préférentielle et en traitant cette zone.

5. Procédé selon la revendication 4, dans laquelle on réalise un second maillage au niveau de ladite zone, ledit second maillage comportant plus de mailles que le premier maillage, et l'on détermine un nouveau profil de pénétration.

6. Procédé selon l'une des revendications précédentes, dans lequel on optimise le traitement en modifiant le potentiel de la pièce de matière souple en fonction dudit profil, ou en modifiant la quantité de produit injecté.

7. Procédé selon l'une des revendications précédentes, dans lequel on utilise deux électrodes, l'une constituant une cathode, l'autre une anode, et l'on optimise le traitement en inversant la polarité desdites électrodes de façon à favoriser une polymérisation homogène dudit produit dans ledit matériau.

8. Procédé selon l'une des revendications précédentes, dans lequel ledit matériau appartient à une construction possédant une surface intrados et une surface extrados, on optimise le traitement en couplant la pièce de matière souple positionnée sur l'une desdites surfaces, à des électrodes radiantes positionnées sur l'autre surface.

9. Procédé selon la revendication 8, dans lequel on optimise le traitement en injectant ledit produit par l'une desdites surfaces de ladite construction en alimentant les électrodes radiantes en produit de traitement, et en portant les électrodes radiantes à un potentiel électrique, puis en portant la pièce de matière souple à un potentiel électrique pour attirer ledit produit vers l'autre surface de ladite construction.

10. Procédé selon l'une des revendications précédentes, dans lequel on optimise le traitement en utilisant des électrodes équipées d'une alimentation individuelle en produit, et une alimentation électrique individuelle.

11. Procédé selon l'une des revendications précédentes, dans lequel ledit matériau est un matériau d'une construction ou un matériau constitutif d'un terrain.

## Patentansprüche

1. Verfahren zur Behandlung eines Materials durch Elektroinjektion eines Mittels zur Behandlung des Materials, wobei auf mindestens einer zugänglichen Fläche des Materials mindestens ein Teil aus schmiegsamem Material angebracht und befestigt wird, derart, dass das Teil sich an die Form der zugänglichen Fläche anschmiegt, das Teil aus schmiegsamem Material auf ein elektrisches Potenzial gebracht wird und dem Teil aus biegsamem Material eine Lösung des Behandlungsmittels zugeführt wird, **dadurch gekennzeichnet, dass**:
- ein Eindringungsprofil des Behandlungsmaterials mittels Messungen der Dielektrizitätskonstante des Materials für unterschiedliche Tiefen innerhalb des Materials bestimmt wird; und
- die Behandlung in Abhängigkeit von dem Profil optimiert wird.

2. Verfahren nach Anspruch 1, wobei das Eindringungsprofil durch das Ausführen der folgenden Schritte bestimmt wird:
- Ausführen eines ersten Rasters auf zumindest einem Teil der zugänglichen Fläche;
- Ausführen der Messungen der Dielektrizitätskonstante an jedem Punkt des Rasters.

3. Verfahren nach einem der vorhergehenden Ansprüche, wobei ein zweites Eindringungsprofil des Behandlungsmittels mittels Spannungsmessungen im Inneren des Materials während der Behandlung bestimmt wird.

4. Verfahren nach einem der vorhergehenden Ansprüche, wobei die Behandlung durch Bestimmen einer bevorzugt zu behandelnden Zone mittels des Eindringungsprofils und durch Behandeln dieser Zone optimiert wird.

5. Verfahren nach Anspruch 4, wobei ein zweites Raster im Bereich der Zone ausgeführt wird, wobei das zweite Raster mehr Rasterelemente umfasst als das erste Raster und ein neues Eindringungsprofil bestimmt wird.

6. Verfahren nach einem der vorhergehenden Ansprüche, wobei die Behandlung durch Ändern des Potenzials des Teils aus schmiegsamem Material in Abhängigkeit von dem Profil und durch Ändern der Menge an injiziertem Mittel optimiert wird.

7. Verfahren nach einem der vorhergehenden Ansprüche, wobei zwei Elektroden verwendet werden, von denen die eine eine Kathode und die andere eine Anode bildet, und die Behandlung durch Umkehrung der Polarität der Elektroden optimiert wird, derart, dass eine homogene Polymerisation des Mittels in dem Material begünstigt wird.

8. Verfahren nach einem der vorhergehenden Ansprüche, wobei das Material zu einem Bauwerk gehört, das eine Innenfläche und eine Außenfläche besitzt, und die Behandlung durch Koppeln des Teils aus schmiegsamem Material, das auf einer der Flächen positioniert ist, mit aussendenden Elektroden, die auf der anderen Fläche positioniert sind, optimiert wird.

9. Verfahren nach Anspruch 8, wobei die Behandlung durch Injizieren des Mittels durch eine der Flächen des Bauwerks durch Zuführen von Behandlungsmittel zu den aussendenden Elektroden und durch Bringen der aussendenden Elektroden auf ein elektrisches Potenzial und dann durch Bringen des Teils aus biegsamem Material auf ein elektrisches Potenzial zum Anziehen des Mittels in Richtung der anderen Fläche des Bauwerks optimiert wird.

10. Verfahren nach einem der vorhergehenden Ansprüche, wobei die Behandlung durch die Verwendung von Elektroden optimiert wird, die mit einer individuellen Zufuhr von Mittel und einer individuellen Stromversorgung ausgerüstet sind.

11. Verfahren nach einem der vorhergehenden Ansprüche, wobei das Material ein Material eines Bauwerks oder ein Material ist, aus dem ein Gelände besteht.

## Claims

1. A method of treating a material by electroinjection of a treatment product for the material, wherein at least one part made of a flexible material is applied and fastened to at least one accessible surface of the material so that the part matches the shape of the accessible surface, the flexible part is brought to an electric potential and the flexible part is supplied with a solution of said treatment product, **characterized in that**:
- a penetration profile of said treatment product is determined by means of dielectric constant measurements of said material for different depths within said material, and
- the treatment is optimized according to said profile.

2. A method as claimed in claim 1, wherein said penetration profile is determined by carrying out the following stages:
- constructing a first grid over at least part of said accessible surface, and
- carrying out, at each point of the grid, said dielectric constant measurements.

3. A method as claimed in any one of the previous claims, wherein a second penetration profile of said treatment product is determined by means of voltage measurements within said material under treatment.

4. A method as claimed in any one of the previous claims, wherein the treatment is optimized by determining, by means of the penetration profile, an area to be preferentially treated and by treating this area.

5. A method as claimed in claim 4, wherein a second grid is constructed at said area, said second grid comprising more cells than the first grid, and a new penetration profile is determined.

6. A method as claimed in any one of the previous claims, wherein the treatment is optimized by modifying the potential of the flexible part according to said profile, or by modifying the amount of injected product.

7. A method as claimed in any one of the previous claims, wherein two electrodes are used, one being a cathode, the other an anode, and the treatment is optimized by reversing the polarity of said electrodes so as to promote homogeneous polymerization of said product in said material.

8. A method as claimed in any one of the previous claims, wherein said material belongs to a construction having a lower surface and an upper surface, the treatment is optimized by coupling the flexible part positioned on one of said surfaces to radiant electrodes positioned on the other surface.

9. A method as claimed in claim 8, wherein the treatment is optimized by injecting said product through one of said surfaces of said construction by supplying the radiant electrodes with treatment product and by bringing the radiant electrodes to an electric potential, then by bringing the flexible part to an electric potential so as to attract said product to the other surface of said construction.

10. A method as claimed in any one of the previous claims, wherein the treatment is optimized by using electrodes provided with an individual product supply and an individual power supply.

11. A method as claimed in any one of the previous claims, wherein said material is a material of a construction or a constituent material of a terrain.
